# EUROPÄISCHE PATENTSCHRIFT

(11) **EP 1 037 452 B1**
(45) Veröffentlichungstag und Bekanntmachung des Hinweises auf die Patenterteilung: **08.06.2005**
(21) Anmeldenummer: 00105599.5
(22) Anmeldetag: 16.03.2000
(51) Int. Cl.: H04M 3/42

(54) **Vermittlungseinrichtung zum Parallelschalten von Teilnehmerendgeräten und dazugehöriges Verfahren**
System and method to switch calls parallel to different end users
Système et procédé pour la connection d'un appel vers plusieurs utilisateurs en parallèle

(30) Priorität: 16.03.1999 DE 19911713
(43) Veröffentlichungstag der Anmeldung: 20.09.2000
(73) Patentinhaber: SIEMENS AKTIENGESELLSCHAFT, 80333 München (DE)
(72) Erfinder: Berger, Harald, 33100 Paderborn (DE); Jabs, Markus, 33165 Lichtenau (DE); Scharfen, Gerhard, 33181 Haaren (DE)

(56) Entgegenhaltungen:
- WO-A-89/11765
- US-A- 5 159 626
- BOOM W ET AL: "NEW GROUP FEATURE COLLECTION FOR SOPHO-S ISPBXS" PHILIPS TELECOMMUNICATION REVIEW,NL,PHILIPS TELECOMMUNICATIE INDUSTRIE N.V. HILVERSUM, Bd. 51, Nr. 3, 1. Dezember 1993 (1993-12-01), Seiten 10-16, XP000457193

## Beschreibung

Die Erfindung betrifft eine Vermittlungseinrichtung zum Parallelschalten von Teilnehmerendgeräten und ein dazugehöriges Verfahren und bezieht sich insbesondere auf eine private Nebenstellenanlage und ein dazugehöriges Verfahren zum Parallelschalten von Teilnehmerendgeräten.

Moderne Kommunikationstechniken erlauben eine verbesserte Erreichbarkeit eines Teilnehmers. Aus der US 5668862 ist ein Verfahren und eine Einrichtung bekannt, mit dem persönliche Kommunikationsdienste bereitgestellt werden. Einem Teilnehmer können dabei verschiedene Rollen zugeordnet werden, in Abhängigkeit derer ein an einem ersten ihm zugeordneten Teilnehmerendgerät eingehender Ruf an ein weiteres Kommunikationsendgerät weitergeleitet wird. Auf dieses Weise ist auch eine Überleitung von einem drahtgebundenen Teilnehmerendgerät, beispielsweise einem Bürotelefon, auf ein schnurloses Teilnehmerendgerät möglich.

Mit der Verbreitung insbesondere von schnurlosen Teilnehmerendgeräten wie z. B. DECT-Telefonen wächst beim Verbraucher zusehends der Wunsch nach einem Parallelschalten dieser schnurlosen Teilnehmerendgeräte mit bereits existierenden schnurgebundenen Teilnehmerendgeräten.

Zur Realisiserung einer derartigen erweiterten Funktion kann beispielsweise am schnurgebundenen Teilnehmerendgerät eine Umleitung aktiviert werden, wodurch alle eingehenden Rufe dann nur noch am schnurlosen Teilnehmerendgerät signalisiert werden. Auf diese Weise ist der Benutzer über das schnurlose Teilnehmerendgerät erreichbar, wobei auch auf weitere externe Teilnehmerendgeräte umgeleitet werden kann. Nachteilig bei dieser herkömmlichen Lösung ist jedoch die relativ aufwendige Prozedur zum Aktivieren bzw. Deaktivieren der Rufumleitung im schnurgebundenen Teilnehmerendgerät. Ferner wird ein eingehender Ruf lediglich am schnurlosen Teilnehmerendgerät signalisiert und nicht länger am schnurgebundenen Teilnehmerendgerät.

Ferner besteht bei einigen herkömmlichen Vermittlungseinrichtungen die Möglichkeit, daran angeschlossene Teilnehmerendgeräte über eine sogenannte "Teamlösung" oder einen "Sammelanschluß" vermittlungstechnisch parallel zu schalten. In diesem Fall werden eingehende Rufe bei allen parallel geschalteten Teilnehmerendgeräten gleichzeitig signalisiert. Eine aufwendige Aktivierung/Deaktivierung der vorstehend beschriebenen Rufumleitung entfällt bei dieser Lösung, da die Rufe automatisch bei allen parallel geschalteten Teilnehmerendgeräten signalisiert werden. Nachteilig ist jedoch bei dieser herkömmlichen Lösung, daß in Abhängigkeit von der konkreten technischen Realisierung die jeweiligen Teilnehmerendgeräte bei einem ausgehenden Ruf dieselbe oder verschiedene Leitungen belegen und demzufolge nach außen unterschiedlich signalisiert bzw. mit derselben oder verschiedenen Rufnummern angezeigt werden.

Der Erfindung liegt die Aufgabe zugrunde, eine Vermittlungseinrichtung und ein dazugehöriges Verfahren zum Parallelschalten von Teilnehmerendgeräten anzugeben, das einen erhöhten Bedienerkomfort ermöglicht.

Erfindungsgemäß ist diese Aufgabe hinsichtlich der Vermittlungseinrichtung durch die Merkmale des Patentanspruchs 1 und hinsichtlich des Verfahrens durch die Maßnahmen des Patentanspruchs 6 gelöst.

Ein in der peripheren Steuereinheit der Vermittlungseinrichtung vorhandener Schnittstellentreiber zum Ansteuern der Teilnehmerschnittstellen besitzt hierbei eine Hauptteilnehmersteuerung zur Steuerung eines Hauptteilnehmer-Endgeräts sowie zumindest eine Nebenteilnehmersteuerung zur Steuerung von zumindest einem Nebenteilnehmer-Endgerät. Eine erste Verbindungsvorrichtung verbindet die Hauptteilnehmersteuerung mit der zumindest einen Nebenteilnehmersteuerung, wodurch alle parallel geschalteten Teilnehmerendgeräte unter derselben Rufnummer erreichbar sind und ein eingehender Ruf bei allen Teilnehmerendgeräten gleichzeitig signalisiert wird. Darüber hinaus wird eine Verbindung zu dem Teilnehmerendgerät durchgeschaltet, das den eingehenden Ruf annimmt. Ferner belegen die parallel geschalteten Teilnehmerendgeräte immer dieselbe Leitung, d. h. die Leitung der Hauptteilnehmersteuerung, wodurch beim Angerufenen immer die Rufnummer des Hauptteilnehmer-Endgeräts im Display erscheint, auch wenn der Ruf von einem Nebenteilnehmer-Endgerät getätigt wird.

Ferner besitzt der Schnittstellentreiber eine zweite Verbindungsvorrichtung, die die Hauptteilnehmersteuerung mit der zumindest einen Nebenteilnehmersteuerung logisch verbindet. Auf diese Weise werden neben der Verbindungssteuerung auch komplexe Telekommunikations-Leistungsmerkmale der Vermittlungseinrichtung für beide Teilnehmerendgeräte parallel bearbeitet. Genauer gesagt wird eine Modifikation eines vorbestimmten Leistungsmerkmals bei einem Teilnehmerendgerät gleichzeitig bei allen weiteren parallel geschalteten Teilnehmerendgeräten durchgeführt. Der Benutzerkomfort wird dadurch außerordentlich verbessert.

In den Unteransprüchen sind vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:
- Figur 1: ein schematisches Blockschaltbild einer Vermittlungseinrichtung gemäß der vorliegenden Erfindung;
- Figur 2: ein schematisches Blockschaltbild eines erfindungsgemäßen Schnittstellentreibers beim Aufbau einer Internverbindung;
- Figur 3: ein schematisches Blockschaltbild des erfindungsgemäßen Schnittstellentreibers bei der verbindungstechnischen Parallelschaltung;
- Figur 4: ein schematisches Blockschaltbild des erfindungsgemäßen Schnittstellentreibers bei der Synchronisation eines internen Leistungsmerkmals; und
- Figur 5: ein schematisches Blockschaltbild des erfindungsgemäßen Schnittstellentreibers bei der Synchronisation eines externen Leistungsmerkmals.

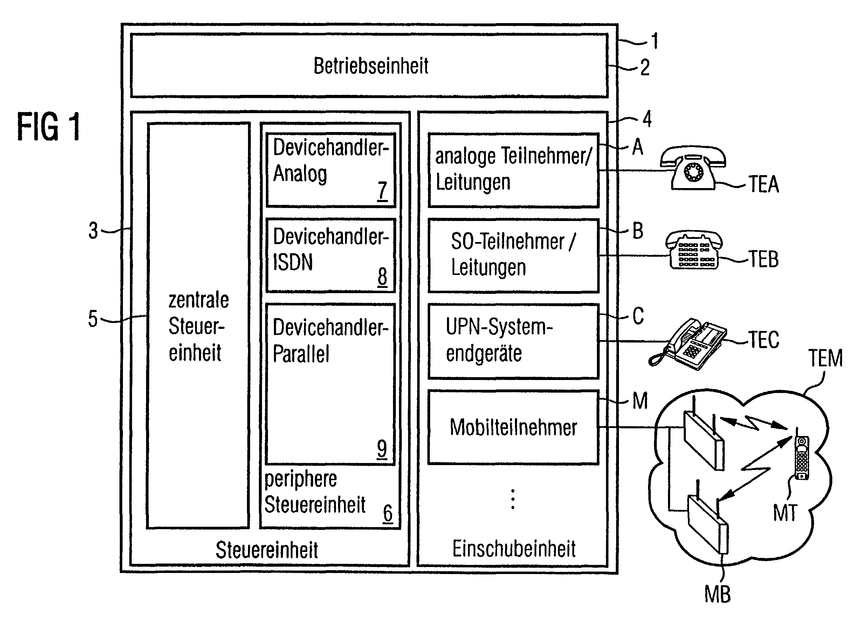

Die Figur 1 zeigt als Vermittlungseinrichtung 1 eine private Nebenstellenanlage, an die eine Vielzahl von Teilnehmerendgeräten angeschaltet sind. Derartige Teilnehmerendgeräte sind beispielsweise ein in Figur 1 dargestelltes analoges Teilnehmerendgerät TEA, ein ISDN-Teilnehmerendgerät TEB, ein digitales Systemendgerät TEC sowie ein schnurloses Teilnehmerendgerätesystem TEM. Bei dem analogen Teilnehmerendgerät TEA und dem ISDN-Teilnehmerendgerät TEB befindet sich die Intelligenz bzw. Realisierung der Telekommunikations-Leistungsmerkmale hauptsächlich in den Teilnehmerendgeräten. Demgegenüber befindet sich die Intelligenz bei den Teilnehmerendgeräten TEC und TEM in der privaten Nebenstellenanlage 1, wobei komplexe Telekommunikations-Leistungsmerkmale in der privaten Nebenstellenanlage 1 realisiert sind. Gemäß Figur 1 besteht das schnurlose Teilnehmerendgerätesystem TEM aus zwei Basisstationen MB und einem dazugehörigen schnurlosen Telefon bzw. Teilnehmerendgerät MT.

Zum Anschalten der verschiedenen Teilnehmerendgeräte besitzt die private Nebenstellenanlage 1 eine Einschubeinheit 4 mit einer Vielzahl von Teilnehmerschnittstellen A, B, C und M. Die Teilnehmerschnittstellen A, B, C und M dienen hierbei dem Anschluß der dargestellten Teilnehmerendgeräte sowie Basisstationen MB für schnurlose Telefone (DECT-Telefone). Derartige Teilnehmerschnittstellen können jedoch auch zum Anschluß von Leitungen zu einer öffentlichen Vermittlungsstelle und/oder für Vernetzungen dienen.

Eine Steuereinheit 3 besteht aus einer zentralen Steuereinheit 5 und einer peripheren Steuereinheit 6. Die zentrale Steuereinheit dient u. a. der Steuerung von Vermittlungsvorgängen, Berechtigungsvergabe und dergleichen. Demgegenüber ist die periphere Steuereinheit 6 für die Anbindung der verschiedenen Teinehmerschnittstellen A, B, C und M zuständig. Ferner dient die periphere Steuereinheit 6 der Realisierung von endgerätespezifischen Benutzungsoberflächen und verschiedener interner Telekommunikations-Leistungsmerkmale wie z. B. Teamfunktionen, Anruferlisten u. s. w. Gemäß Figur 1 besitzt die periphere Steuereinheit einen Schnittstellentreiber 7 (analoger Devicehandler) zum Ansteuern der analogen Teilnehmerschnittstelle A bzw. des analogen Teilnehmerendgeräts TEA. In gleicher Weise steuert ein Schnittstellentreiber 8 (ISDN-Devicehandler) die digitale Teilnehmerschnittstelle B bzw. das ISDN-Teilnehmerendgerät TEB. Auf eine weitere Beschreibung dieser Komponenten wird nachfolgend verzichtet, da sie für die vorliegende Erfindung nicht von Bedeutung sind.

Demgegenüber realisiert ein Schnittstellentreiber 9 die wesentlichen Funktionen für das Parallelschalten einer Vielzahl von Teilnehmerendgeräten. Gemäß Figur 1 wird nachfolgend das Parallelschalten des digitalen System-Teilnehmerendgeräts TEC mit dem schnurlosen Teilnehmerendgerät MT über den erfindungsgemäßen Schnittstellentreiber 9 beschrieben.

Zum Steuern und Initialisieren allgemeiner Vorgänge besitzt die Vermittlungseinrichtung 1 eine Betriebseinheit 2, die als Betriebstechnik beispielsweise die Zuordnung der verschiedenen Teilnehmerschnittstellen in der Einschubeinheit 4 koordiniert, eine Initialisierung der verschiedenen Blöcke durchführt, der Eingabe und Programmierung dient sowie eine zentrale Verwaltung allgemeiner Daten wie z. B. Datum und Uhrzeit durchführt.

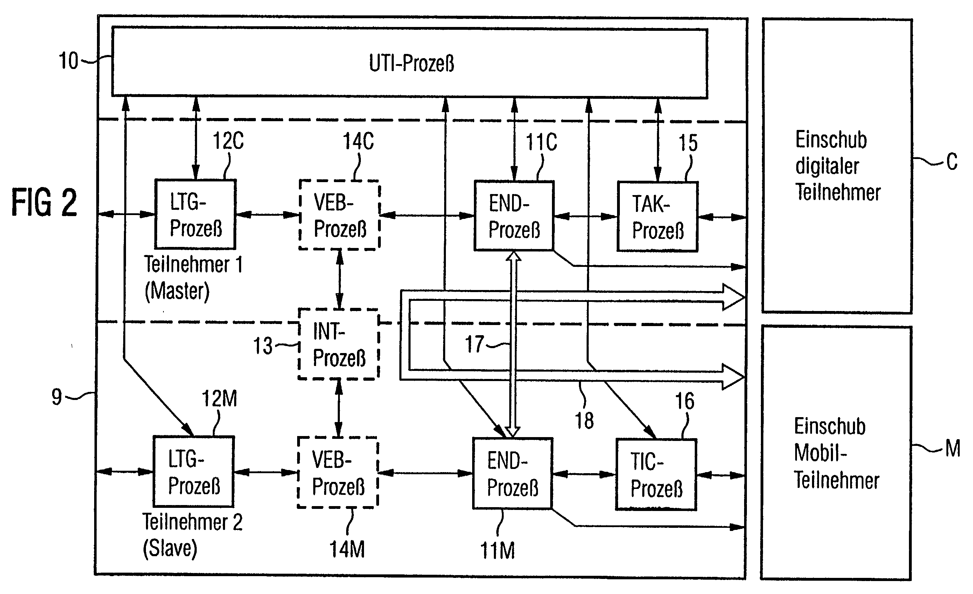

Die Figur 2 zeigt ein schematisches Blockschaltbild des erfindungsgemäßen Schnittstellentreibers 9 beim Aufbau einer Internverbindung zwischen dem schnurlosen Teilnehmerendgerät MT und dem schnurgebundenen Teilnehmerendgerät TEC. Das Bezugszeichen C bezeichnet hierbei wiederum die Teilnehmerschnittstelle bzw. den Einschub für einen digitalen Systemteilnehmer. Das Bezugszeichen M bezeichnet die Teilnehmerschnittstelle bzw. den Einschub für einen Mobilteilnehmer. Bei dem Mobilteilnehmer handelt es sich gemäß Figur 1 um eine Basisstation MB mit einem dazugehörigen schnurlosen Telefon MT. Der Schnittstellentreiber 9 besteht gemäß Figur 2 aus einer Hauptteilnehmersteuerung (Master) und einer Nebenteilnehmersteuerung (Slave), die den jeweiligen Teilnehmerschnittstellen C und M zugeordnet sind. Der Schnittstellentreiber 9 gemäß Figur 2 ermöglicht somit das Parallelschalten des schnurgebundenen Teilnehmerendgeräts TEC mit dem schnurlosen Teilnehmerendgerät MT. Gemäß Figur 2 besteht die Hauptteilnehmersteuerung aus einer Hauptleitungs-Prozeßeinheit (LTG-Prozeß) 12C, einer Hauptverbindungs-Prozeßeinheit (VEB-Prozeß) 14C, einer Hauptendgeräte-Prozeßeinheit (END-Prozeß) 11C und einer Haupttastenkonverter-Prozeßeinheit (TAK-Prozeß) 15. In ähnlicher Weise besteht die Nebenteilnehmersteuerung aus einer Nebenleitungs-Prozeßeinheit (LTG-Prozeß) 12M, einer Nebenverbindungs-Prozeßeinheit (VEB-Prozeß) 14M, einer Nebenendgeräte-Prozeßeinheit (END-Prozeß) 11M und einer Nebentastenkonverter-Prozeßeinheit (TIC-Prozeß) 16.

Die Leitungs-Prozeßeinheiten der Haupt- und Nebenteilnehmersteuerung dienen im wesentlichen zur Anbindung an die zentrale Steuereinheit 5 der Vermittlungseinrichtung 1 sowie der Steuerung von sogenannten Teamfunktionen und Verbindungen. Die Verbindungs-Prozeßeinheiten 14C und 14 M der Haupt- und Nebenteilnehmersteuerung steuern im wesentlichen den Verbindungsaufbau innerhalb des Schnittstellentreibers 9. Die Endgeräte-Prozeßeinheiten 11C und 11M der Haupt- und Nebenteilnehmersteuerung dienen der Steuerung eines jeweiligen Teilnehmerendgeräts und insbesondere der Steuerung der Benutzungsoberfläche sowie von Telekommunikations-Leistungsmerkmalen. Die Endgeräte-Prozeßeinheiten 11C und 11M erzeugen hierbei logische Nachrichten zur Steuerung eines dazugehörigen Teilnehmerendgeräts. Derartige logische Nachrichten können beispielsweise die im Schnittstellentreiber 9 abgelegten Menüstrukturen für die Teilnehmerendgeräte darstellen. Die Tastenkonverter-Prozeßeinheiten 15 und 16 der Haupt- und Nebenteilnehmersteuerung dienen der Umwandlung der logischen Nachrichten in funktionale Nachrichten zur unmittelbaren Steuerung eines dazugehörigen Teilnehmerendgeräts. Da gemäß Figur 1 und 2 das Hauptteilnehmer-Endgerät aus dem digitalen System-Teilnehmerendgerät TEC besteht und das Nebenteilnehmer-Endgerät das schnurlose Teilnehmerendgerät MT ist, unterscheiden sich die jeweiligen Benutzeroberflächen der Teilnehmerendgeräte wesentlich voneinander. So besitzt beispielsweise das schnurlose Teilnehmerendgerät MT eine vollständig andere Tastatur und Anzeige als das schnurgebundene Teilnehmerendgerät TEC.

Aus diesem Grund unterscheidet sich die Tastenkonverter-Prozeßeinheit 15 für das digitale schnurgebundene Teilnehmerendgerät TEC von der Tastenkonverter-Prozeßeinheit 16 für das schnurlose Teilnehmerendgerät MT. Genauer gesagt verwaltet die Tastenkonverter-Prozeßeinheit 15 unter anderem die Tastendaten des schnurgebundenen Teilnehmerendgeräts TEC und setzt die funktionalen Nachrichten eines Teilnehmerendgeräts (z. B. dritte Funktionstaste wurde gedrückt) in logische Nachrichten um (z. B. Taste mit der Funktion "Briefkasten" wurde gedrückt). In umgekehrter Richtung übernimmt die Tastenkonverter-Prozeßeinheit 15 die Ansteuerung der Benutzungsoberfläche (z.B. LEDs) des schnurgebundenen Teilnehmerendgeräts TEC. Beispielsweise wird die logische Nachricht "Schalte die Taste mit der Tastenfunktion "Briefkasten" in den Status blinkend" in die funktionale Nachricht "schalte die dritte Funktionstaste blinkend" umgesetzt.

Da eine derartige "dritte Funktionstaste" beispielsweise bei dem schnurlosen Teilnehmerendgerät MT nicht vorhanden ist, unterscheidet sich die Tastenkonverter-Prozeßeinheit 16 zur unmittelbaren Steuerung des schnurlosen Teilnehmerendgeräts MT grundsätzlich von der Tastenkonverter-Prozeßeinheit 15 zur unmittelbaren Ansteuerung des schnurgebundenen Teilnehmerendgeräts TEC. Genauer gesagt dient die Tastenkonverter-Prozeßeinheit 16 nicht nur zur Umwandlung der logischen Nachrichten in funktionale Nachrichten, sondern darüber hinaus zur Anbindung des schnurlosen Teilnehmerendgeräts (TIC, Tastenkonverter & Interworking unit & Cordless multicell integration). Durch den Einsatz derartiger Tastenkonverter-Prozeßeinheiten 15 und 16 werden die unterschiedlichen funktionalen Nachrichten der verschiedenen Teilnehmerendgeräte in ein einheitliches Format logischer Nachrichten umgesetzt. Dies ermöglicht eine Realisierung zur mittelbaren Steuerung von unterschiedlichsten Teilnehmerendgeräten in verschiedenen Endgerätefamilien bei minimalem Aufwand.

Zur physikalischen Verbindung der Hauptteilnehmersteuerung mit der Nebenteilnehmersteuerung besitzt der erfindungsgemäße Schnittstellentreiber 9 eine Internverbindungs-Prozeßeinheit 13, die die Verbindungs-Prozeßeinheiten 14C und 14M der Haupt- und Nebenteilnehmersteuerung miteinander verbindet. In ähnlicher Weise besitzt der Schnittstellentreiber 9 als zweite Verbindungsvorrichtung eine Nachrichtenschnittstelle 17, die die Endgeräte-Prozeßeinheiten 11C und 11M der Haupt- und Nebenteilnehmersteuerung logisch miteinander verbindet. Genauer gesagt werden über diese Nachrichtenschnittstelle 17 die logischen Nachrichten zwischen der Hauptteilnehmersteuerung und der Nebenteilnehmersteuerung übertragen, wodurch sich eine Synchronisation von Telekommunikations-Leistungsmerkmalen realisieren läßt.

Zur Steuerung der verschiedenen Prozeßeinheiten im erfindungsgemäßen Schnittstellentreiber 9 besitzt dieser eine Verwaltungs-Prozeßeinheit (UTI-Prozeß) 10. Diese Verwaltungs-Prozeßeinheit 10 verwaltet alle Teilnehmerendgeräte zentral und dient insbesondere der Speicherverwaltung, dem An- und Abmelden von Teilnehmerendgeräten, einem System-Hochlauf, einer Besetztlampenfeldsteuerung, einer Teamfunktionalität u. s. w.

Hinsichtlich der sogenannten "Teamfunktionalität" bietet der erfindungsgemäße Schnittstellentreiber 9 die zwei verschiedenen Lösungen "klassisches Team" und "Top Team". Beim "klassischen Team" mit bis zu acht Team-Teilnehmern bzw. Teilnehmerendgeräten können die Leitungen eines Teampartners direkt belegt werden, während beim sogenannten "Top Team" bis zu 64 Teilnehmer bzw. Teilnehmerendgeräte im Team vorhanden sein können. Im vorliegenden Fall wird für das verbindungsbezogene bzw. verbindungstechnische Parallelschalten der Teilnehmerendgeräte TEC und MT die "klassische Teamlösung" des Schnittstellentreibers 9 genutzt, wobei die Funktionalität des "Top Teams" zusätzlich zur Verfügung steht.

Bei der "klassischen Teamlösung" des Schnittstellentreibers 9 werden im wesentlichen die Prozeßeinheiten 12C, 14C, 11C, 13, 12M, 14M und 11M verwendet.

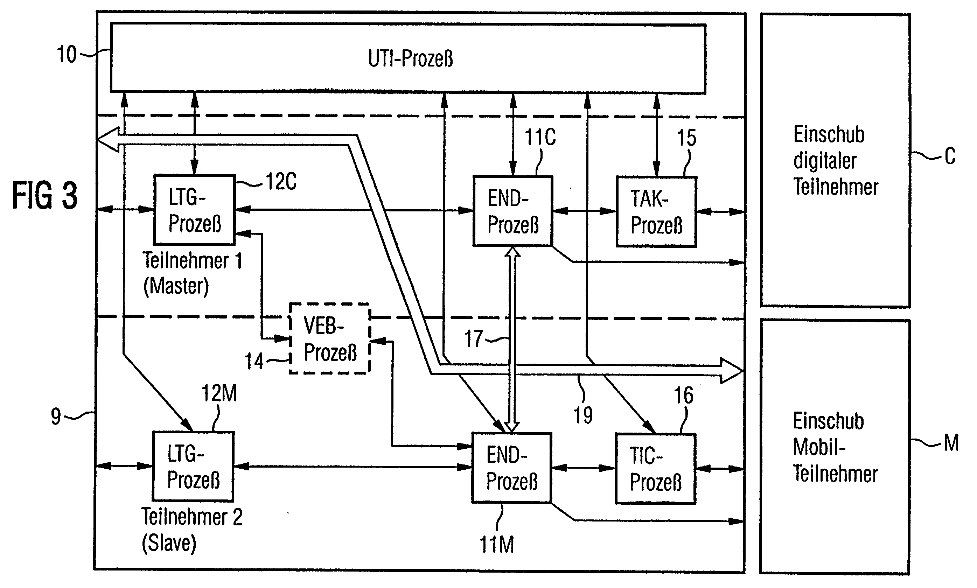

Während auf diese Weise gemäß Figur 2 mit 18 eine Internverbindung im Team aufgebaut werden kann, d. h. eine Verbindung zwischen dem schnurgebundenen Teilnehmerendgerät TEC und dem schnurlosen Teilnehmerendgerät MT, ist in Figur 3 bereits die Grundlage für das verbindungsbezogene bzw. verbindungstechnische Parallelschalten (physikalisches Parallelschalten) der Teilnehmerendgeräte TEC und MT dargestellt.

Die Figur 3 zeigt hierbei ein schematisches Blockschaltbild des erfindungsgemäßen Schnittstellentreibers 9 beim verbindungstechnischen Parallelschalten der Haupt- und Nebenteilnehmersteuerung. In Figur 3 bezeichnen gleiche Bezugszeichen gleiche Prozeßeinheiten bzw. Komponenten wie in Figur 2, weshalb auf eine detaillierte Beschreibung nachfolgend verzichtet wird.

Im Unterschied zur Figur 2 sind in Figur 3 die Prozeßeinheiten 13, 14C und 14M zur Verbindungs-Prozeßeinheit 14 zusammengefaßt, die als eine erste Verbindungsvorrichtung die Hauptteilnehmersteuerung mit der Nebenteilnehmersteuerung physikalisch verbindet. Gemäß Figur 3 belegt das schnurlose Teilnehmerendgerät (Mobiltelefon) MT die Leitung des schnurgebundenen Teilnehmerendgeräts TEC, da die Hauptteilnehmersteuerung hierarchisch über der Nebenteilnehmersteuerung angeordnet ist und bevorzugt die Leitung des schnurgebundenen Teilnehmerendgeräts TEC auswählt. Über eine entsprechende nicht dargestellte Prioritätsschaltung kann jedoch die Hierarchie zwischen der Hauptteilnehmersteuerung und der Nebenteilnehmersteuerung verändert werden, wodurch beispielsweise bevorzugt die Leitung des schnurlosen Teilnehmerendgeräts MT für den Verbindungsaufbau bzw. zur Signalisiserung der eigenen Rufnummer verwendet wird.

Das logische Verbinden der Haupt- und Nebenteilnehmersteuerung bzw. das Parallelschalten der Leistungsmerkmale in der privaten Nebenstellenanlage 1 erfolgt gemäß Figur 2 über die als zweite Verbindungsvorrichtung eingerichtete Nachrichtenschnittstelle 17, die zwischen den Endgeräte-Prozeßeinheiten 11C und 11M der parallel geschalteten Teilnehmerendgeräte TEC und MT bzw. ihren dazugehörigen Haupt- und Nebenteilnehmersteuerungen geschaltet ist. Über diese Nachrichtenschnittstelle 17 synchronisieren die beiden Teilnehmerendgeräte TEC und MT ihre lokalen Daten. Genauer gesagt wird über diese Nachrichtenschnittstelle 17 das entsprechende Datum beim parallel geschalteten Teilnehmerendgerät verändert, sofern sich eine relevante Änderung von Daten in einem Teilnehmerendgerät ergibt. Als Daten werden hierbei insbesondere Telekommunikations-Leistungsmerkmale angesehen.

Über eine nicht dargestellte Auswahleinheit kann hierbei eine Auswahl getroffen werden, welche Leistungsmerkmale der privaten Nebenstellenanlage 1 parallel für beide Teilnehmerendgeräte TEC und MT wirken und welche nicht. Auf diese Weise wirkt das schnurlose Teilnehmerendgerät MT quasi als Fernbedienung des schnurgebundenen Teilnehmerendgeräts, wobei beispielsweise eine Aktivierung einer Rufumleitung am schnurlosen Teilnehmerendgerät ebenso eine Rufumleitung beim schnurgebundenen Teilnehmerendgerät hervorruft und dort eine einer zugehörigen Rufumleitungstaste entsprechende LED automatisch aktiviert und in der Anzeige ein entsprechender Text ausgegeben wird (z. B. "zu: Koch-29201"). Wird andererseits eine Einstellung eines Leistungsmerkmals am schnurgebundenen Teilnehmerendgerät durchgeführt, wie z. B. "Anrufschutz ein", so wird am schnurgebundenen Teilnehmerendgerät beispielsweise eine LED einer entsprechenden Funktionsspeichertaste eingeschaltet und das Telekommunikations-Leistungsmerkmal Anrufschutz" für beide parallel geschaltete Teilnehmerendgeräte aktiviert, d. h. Rufe werden nicht mehr zugestellt. Wird nach aktiviertem Leistungsmerkmal "Anrufschutz" nun am schnurlosen Teilnehmerendgerät MT ein entsprechendes Menü geöffnet, so wird dort angezeigt, daß das Leistungsmerkmal "Anrufschutz" aktiviert wurde. In gleicher Weise kann das Deaktivieren eines Telekommunikations-Leistungsmerkmals sowohl vom schnurgebundenen als auch vom schnurlosen Teilnehmerendgerät TEC und MT durchgeführt werden.

Nachfolgend wird die Synchronisation von Telekommunikations-Leistungsmerkmalen bei parallel geschalteten Teilnehmerendgeräten näher beschrieben.

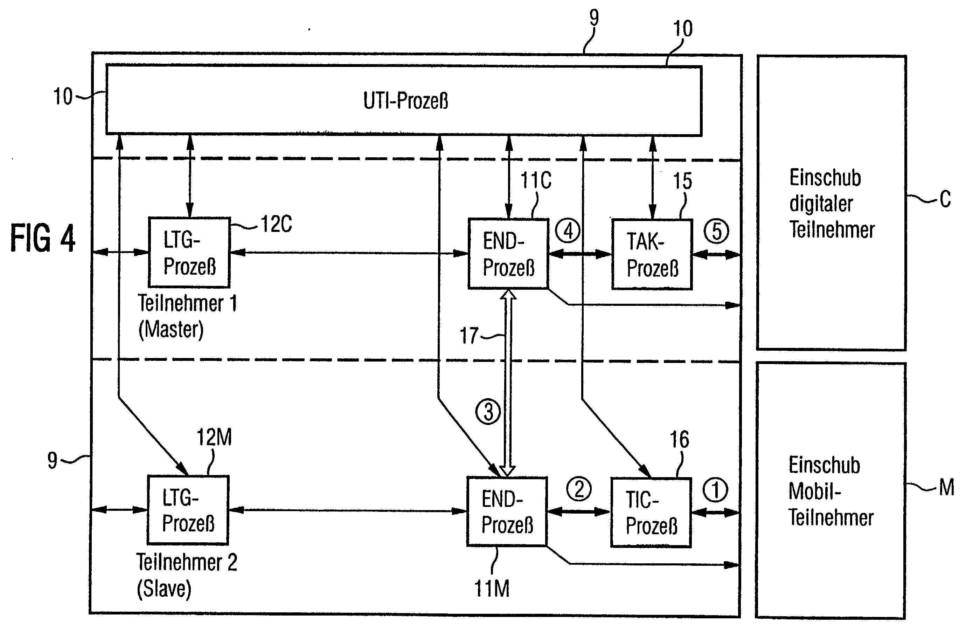

Die Figur 4 zeigt ein schematisches Blockschaltbild des erfindungsgemäßen Schnittstellentreibers 9 bei der Synchronisation eines internen Telekommunikations-Leistungsmerkmals. Gemäß Figur 4 erfolgt eine Synchronisation von Leistungsmerkmalen grundsätzlich über die Endgeräte-Prozeßeinheiten 11C und 11M der parallel geschalteten Teilnehmerendgeräte bzw. der dazugehörigen Haupt- und Nebenteilnehmersteuerung. Die Endgeräte-Prozeßeinheiten 11C und 11M sind hierbei über die Nachrichtenschnittstelle 17 logisch miteinander verbunden. In der Initialisierungsphase (Hochlauf) der parallel geschalteten Teilnehmerendgeräte wird hierbei in den Endgeräte-Prozeßeinheiten 11C und 11M die Information gespeichert, daß es sich jeweils um eine Hauptendgerät-Prozeßeinheit und eine Nebenendgerät-Prozeßeinheit (TWIN-Partner) handelt, wodurch eine hierarchische Ordnung festgelegt wird. Ferner wird bei der Initialisierung Adressierungsinformation abgelegt, die notwendig ist, um die jeweilige Endgeräte-Prozeßeinheit des zugehörigen (parallel geschalteten) Teilnehmerendgeräts zu adressieren.

Gemäß Figur 4 ist die Synchronisation eines Telekommunikations-Leistungsmerkmals dargestellt, das nur lokal, d. h. intern im Schnittstellentreiber 9, realisiert ist und keine Kommunikation mit anderen Modulen bzw. Einheiten der privaten Nebenstellenanlage 1 benötigt.

Beispielsweise wird am schnurlosen Teilnehmerendgerät (Mobiltelefon) MT ein Leistungsmerkmal über die Auswahl eines speziellen Menüpunktes aktiviert (z. B. Anrufverteilung im Top Team ein). Hierbei wird vom schnurlosen Teilnehmerendgerät MT über die zugehörige Basisstation MB zur entsprechenden Teilnehmerschnittstelle M (Einschub Mobilteilnehmer) eine funktionale Nachricht zur Tastenkonverter-Prozeßeinheit (TIC-Prozeß) 16 geroutet 1 . Die Tastenkonverter-Prozeßeinheit 16 bereitet die funktionale Nachricht der Teilnehmerschnittstelle M (z. B. "soft key 1 wurde gedrückt") auf und sendet eine logische Nachricht (z. B. Anrufverteilung ein) an seine eigene Endgeräte-Prozeßeinheit 11M 2 . In der Endgeräte-Prozeßeinheit 11M der Nebenteilnehmersteuerung (Mobiltelefon) wird nun das Leistungsmerkmal "Anrufverteilung im Top Team ein" ausgeführt und der neue Zustand des Teilnehmerendgeräts gespeichert. Ferner wird festgestellt, daß es sich bei dem schnurlosen Teilnehmerendgerät MT um einen Teilnehmer in einer Parallelschaltungs-Konfiguration (TWIN-Konfiguration) handelt und es wird über die Nachrichtenschnittstelle 17 eine logische Nachricht versandt 3 , die die logische Nachricht beinhaltet, die Anrufverteilung zu aktivieren.

Die Endgeräte-Prozeßeinheit 11C des parallel geschalteten Teilnehmerendgeräts TEC (TWIN-Partner) verarbeitet nun ebenfalls diese logische Nachricht und aktiviert das entsprechende Leistungsmerkmal. Gleichzeitig wird der neue Zustand bzw. Status in seinem lokalen Datenspeicher abgelegt. Ferner wird in der Endgeräte-Prozeßeinheit 11C festgestellt, daß diesem Leistungsmerkmal eine Tastenfunktion zugeordnet ist, weshalb eine logische Nachricht an die Tastenkonverter-Prozeßeinheit 15 gesendet wird 4 . Gemäß dieser logischen Nachricht soll in den Tastendaten der Tastenkonverter-Prozeßeinheit 15 nach einer Taste mit der Tastenfunktion "Anrufverteilung" gesucht werden und die zugehörige LED eingeschaltet werden. Demzufolge durchsucht die Tastenkoverter-Prozeßeinheit 15 die Tastendaten und schaltet bei Auffinden einer entsprechenden Tastenfunktion über eine funktionale Nachricht (z. B. "schalte die siebte LED am Teilnehmerendgerät") die entsprechende LED am schnurgebundenen Teilnehmerendgerät ein 5.

Demzufolge wird mit Aktivierung des Leistungsmerkmals am schnurlosen Teilnehmerendgerät MT automatisch das entsprechende Leistungsmerkmal beim parallel geschalteten Teilnehmerendgerät TEC (TWIN-Partner) aktiviert und gegebenenfalls auch signalisiert.

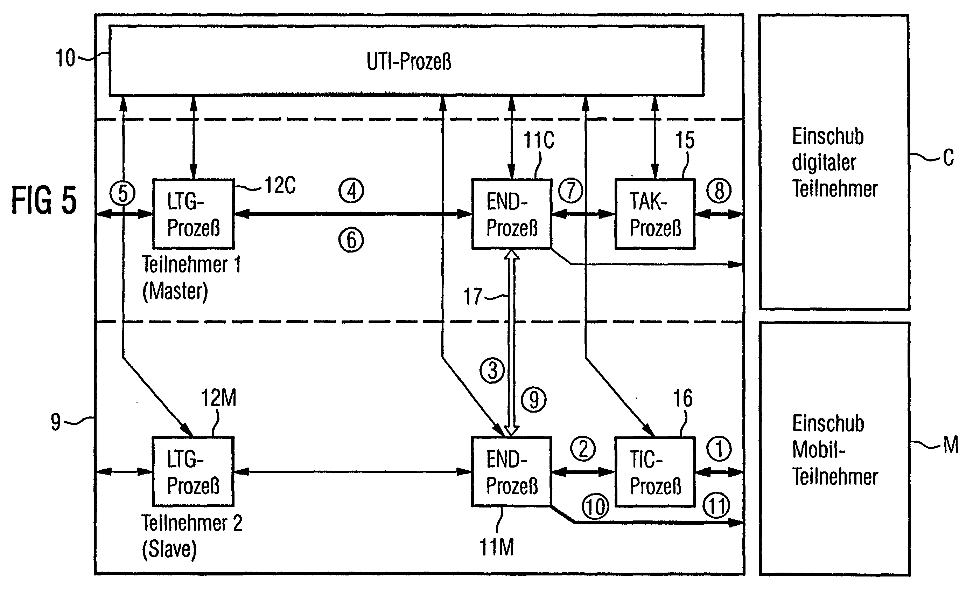

Die Figur 5 zeigt ein schematisches Blockschaltbild des erfindungsgemäßen Schnittstellentreibers 9 bei der Synchronisation eines externen Telekommunikations-Leistungsmerkmals.

Im Gegensatz zu Figur 4 wird in Figur 5 der Ablauf für das Aktivieren eines Leistungsmerkmals dargestellt, das nicht innerhalb des Schnittstellentreibers 9 realisiert ist, sondern sich in anderen Einheiten der privaten Nebenstellenanlage 1 oder in einem externer Server bzw. Rechner befindet.

Demzufolge erfordert dieser Fall eine Kommunikation mit anderen Einheiten innerhalb der Nebenstellenanlage 1. Beispielsweise wird am schnurlosen Teilnehmerendgerät MT (Mobiltelefon) ein Leistungsmerkmal über die Auswhal eines Menüpunktes aktiviert (z. B. Anrufschutz ein). In gleicher Weise wie beim Synchronisationsprozeß gemäß Figur 4 wird zunächst vom schnurlosen Teilnehmerendgerät MT über die Basisstation MB und die dazugehörige Teilnehmerschnittstelle M eine funktionale Nachricht zur Tastenkonverter-Prozeßeinheit (TIC-Prozeß) 16 geroutet 1 . Wiederum wird die funktionale Nachricht der Teilnehmerschnittstelle M (z. B. soft key 2 wurde gedrückt) in der Tastenkonverter-Prozeßeinheit 16 aufbereitet und als logische Nachricht (z. B. Anrufschutz ein) an die Endgeräte-Prozeßeinheit 11M gesendet 2 .

In der Endgeräte-Prozeßeinheit 11M wird nun festgestellt, daß dieses Leistungsmerkmal nicht im Schnittstellentreiber 9 realisiert ist. Ferner wird festgestellt, daß es sich bei dem schnurlosen Teilnehmerendgerät MT um ein Teilnehmerendgerät in einer Parallelschaltungs-Konfiguration (TWIN-Konfiguration) handelt. In Abhängigkeit von seiner hierarchischen Ordnung sendet die Endgeräte-Prozeßeinheit 11M eine logische Nachricht über die Nachrichtenschnittstelle 17 an die Endgeräte-Prozeßeinheit 11C der Hauptteilnehmersteuerung 3 . Die Endgeräte-Prozeßeinheit 11C verarbeitet nunmehr die logische Nachricht (z. B. Anrufschutz ein), wobei ebenfalls festgestellt wird, daß dieses Leistungsmerkmal nicht im Schnittstellentreiber 9 realisiert ist. Die Endgeräte-Prozeßeinheit 11C sendet daher eine entsprechende logische Nachricht 4 über die Leitungs-Prozeßeinheit 12C an die zentrale Steuereinheit 5 der privaten Nebenstellenanlage 1 (bzw. das Modul der Nebenstellenanlage 1, welches dieses Leistungsmerkmal steuert) 5 . Die zentrale Steuereinheit 5 quittiert das Aktivieren des Leistungsmerkmals, wobei die Quittung über die Leitungs-Prozeßeinheit 12C der Hauptteilnehmersteuerung wieder an die Endgeräte-Prozeßeinheit 11C zurückgeroutet wird 6 .

Die Endgeräte-Prozeßeinheit 11C erhält nun die logische Nachricht der zentralen Steuereinheit 5, wonach das Leistungsmerkmal "Anrufschutz" aktiviert wurde. Anhand des Zustands bzw. Status der Endgeräte-Prozeßeinheit 11C und der Information in seinem lokalen Daten, wonach es sich um einen prallel geschalteten Hauptteilnehmer handelt, erkennt die Endgerät-Prozeßeinheit 11C, daß das Leistungsmerkmal "Anrufschutz" von der dazugehörigen Nebenteilnehmersteuerung aktiviert wurde. Die Endgeräte-Prozeßeinheit 11C der Hauptteilnehmersteuerung speichert nun in seinen lokalen Datenspeicher die Information, daß das Leistungsmerkmal "Anrufschutz" aktiviert wurde.

In der Endgeräte-Prozeßeinheit 11C wird ferner festgestellt, daß diesem Leistungsmerkmal eine Tastenfunktion zugeordnet ist. Demzufolge wird eine logische Nachricht an die Tastenkonverter-Prozeßeinheit 15 gesendet 7 . In dieser logischen Nachricht befindet sich die Information, daß in den Tastendaten der Tastenkonverter-Prozeßeinheit 15 nach einer Taste mit der Tastenfunktion "Anrufschutz" gesucht und die zugehörige LED am schnurgebundenen Teilnehmerendgerät TEC eingeschaltet werden soll. Falls die Tastenkonverter-Prozeßeinheit 15 eine entsprechende Tastenfunktion gefunden hat, sendet sie eine funktionale Nachricht an die entsprechende LED im schnurgebundenen Teilnehmerendgerät (z. B. funktionale Nachricht "Schalte die neunte LED am Teilnehmerendgerät") 8 .

Da es sich bei der Endgeräte-Prozeßeinheit 11C um eine parallelgeschaltete Prozeßeinheit mit übergeordneter Hierarchie (TWIN-MASTER) handelt, wird anschließend die logische Nachricht zum Aktivieren des Leistungsmerkmals "Anrufschutz" über die Nachrichtenschnittstelle 17 zu der Endgeräte-Prozeßeinheit 11M der Nebenteilnehmersteuerung (TWIN-SLAVE) geroutet 9 . Die Endgeräte-Prozeßeinheit 11M der Nebenteilnehmersteuerung erkennt nun anhand seines internen Zustandes bzw. Status, daß sie dieses Leistungsmerkmal aktiviert hat und kann nun in der Anzeige bzw. dem Display des schnurlosen Teilnehmerendgeräts MT eine positive Quittung für das Aktivieren des Anrufschutzes ausgeben 10 + 11.

Die vorstehend beschriebene Erfindung ermöglicht es somit, an einer privaten Nebenstellenanlage ein schnurgebundenes Teilnehmerendgerät und ein schnurloses Teilnehmerendgerät derart zu betreiben, daß beide Teilnehmerendgeräte TEC und MT unter derselben Rufnummer erreichbar sind, d. h. ein eingehender Ruf bei beiden Teilnehmerendgeräten gleichzeitig signalisiert wird; die Verbindung zu dem Teilnehmerendgerät durchgeschaltet wird, das den Ruf annimmt; beide Teilnehmerendgeräte dieselbe Leitung belegen, d. h. bei dem Angerufenen erscheint immer die Rufnummer des schnurgebundenen Teilnehmerendgeräts in der Anzeige, auch wenn der Ruf vom schnurlosen Teilnehmerendgerät MT erfolgt; die Verbindungsdatenerfassung erfolgt als Summe beider Teilnehmerendgeräte; und neben der physikalischen Verbindungssteuerung auch die Telekommunikations-Leistungsmerkmale für beide Teilnehmerendgeräte parallel geschaltet sind (z. B. Rufumleitungen, Rückrufe, Anruferliste, Mailfunktionalität, Anruf heranholen, Verbindungskosten abfragen, Anrufschutz ein, u. s. w.).

Leistungsmerkmale der privaten Nebenstellenanlage, deren Zusammenschaltung nicht sinnvoll ist, wie z. B. eine Ruhefunktion, können für die parallel geschalteten Teilnehmerendgeräte weiterhin getrennt behandelt werden.

Die Erfindung wurde vorstehend anhand eines schnurlosen und eines schnurgebundenen Teilnehmerendgeräts beschrieben.

Ferner wurde die vorliegende Erfindung anhand einer privaten Nebenstellenanlage beschrieben, sie kann jedoch auch auf öffentliche Vermittlungssysteme und andere Telekommunikations-Vermittlungseinrichtungen angewendet werden.

## Patentansprüche

1. Vermittlungseinrichtung zum Parallelschalten von Teilnehmerendgeräten (TEA, TEB, TEC, TEM) mit:
einer Einschubeinheit (4) zur Realisierung einer Vielzahl von Teilnehmerschnittstellen (A, B, C, M) zu den Teilnehmerendgeräten (TEA, TEB, TEC, TEM); einer Steuereinheit (3) mit
einer zentralen Steuereinheit (5) zum Steuern von zentralen Vermittlungsvorgängen in der Vermittlungseinrichtung (1), sowie
einer peripheren Steuereinheit (6) zur Steuerung der Anbindung der Vielzahl von Teilnehmerschnittstellen (A, B, C, M); und
**dadurch gekennzeichnet, daß**
die periphere Steuereinheit (6) einen Schnittstellentreiber (9) zum Ansteuern von zumindest zwei Teilnehmerschnittstellen (A, B, C, M) aufweist und der Schnittstellentreiber (9)
- eine Hauptteilnehmersteuerung (12C, 11C, 15) zur Steuerung eines Hauptteilnehmer-Endgeräts (TEC) sowie
- zumindest eine Nebenteilnehmersteuerung (12M, 11M, 16) zur Steuerung von zumindest einem Nebenteilnehmer-Endgerät (MT) und
- eine zentrale Treibersteuerung (10) zum zentralen Steuern von Verwaltungsvorgängen im Schnittstellentreiber (9) besitzt, wobei
- eine erste Verbindungsvorrichtung (14; 14C, 14M, 13) die Hauptteilnehmersteuerung mit der zumindest einen Nebenteilnehmersteuerung physikalisch verbindet, und
- eine zweite Verbindungsvorrichtung (17) die Hauptteilnehmersteuerung mit der zumindest einen Nebenteilnehmersteuerung zur Synchronisation von Daten zur Leistungsmerkmalsteuerung logisch verbindet.

2. Vorrichtung nach Patentanspruch 1,
**dadurch gekennzeichnet, daß** die Haupt- und Nebenteilnehmersteuerung jeweils
eine Leitungs-Prozeßeinheit (12C und 12M) zur Anbindung an die zentrale Steuereinheit (5);
eine Verbindungs-Prozeßeinheit (14C und 14M) zur Steuerung eines Verbindungsaufbaus für ein dazugehöriges Teilnehmerendgerät;
eine Endgeräte-Prozeßeinheit (11C und 11M) zum Erzeugen von logischen Nachrichten zur Steuerung eines dazugehörigen Teilnehmerendgeräts; und
eine Tastenkonverter-Prozeßeinheit (15 und 16) zur Umwandlung der logischen Nachrichten in funktionale Nachrichten zur unmittelbaren Steuerung eines dazugehörigen Teilnehmerendgeräts aufweist.

3. Vorrichtung nach Patentanspruch 2,
**dadurch gekennzeichnet, daß** die erste Verbindungsvorrichtung eine Internverbindungs-Prozeßeinheit (13) aufweist, die die Verbindungs-Prozeßeinheiten (14C, 14M) der Haupt- und Nebenteilnehmersteuerung physikalisch miteinander verbindet.

4. Vorrichtung nach Patentanspruch 2 oder 3,
**dadurch gekennzeichnet, daß** die zweite Verbindungsvorrichtung eine Nachrichtenschnittstelle (17) aufweist, die die Endgeräte-Prozeßeinheiten (11C, 11M) der Haupt- und Nebenteilnehmersteuerung logisch miteinander verbindet.

5. Vermittlungseinrichtung nach einem der Patentansprüche 1 bis 4,
**dadurch gekennzeichnet, daß** die parallel geschalteten Teilnehmerendgeräte zumindest ein digitales schnurgebundenes Teilnehmerendgerät (TEC) und ein schnurloses Teilnehmerendgerät (TEM) aufweisen, und die Vermittlungseinrichtung (1) eine private Nebenstellenanlage darstellt.

6. Verfahren zum Parallelschalten von Teilnehmerendgeräten mit den Schritten:
a) Realisierung einer physikalischen Verbindung der parallel zu schaltenden Teilnehmerendgeräte, und
b) Realisierung einer logischen Verbindung der parallel zu schaltenden Teilnehmerendgeräte mit folgenden Schritten:
b1) Erfassen eines von einer Vermittlungseinrichtung extern zu bearbeitenden Telekommunikations-Leistungsmerkmals als funktionale Nachricht;
b2) Umwandeln der erfaßten funktionalen Nachricht in eine logische Nachricht;
b3) Erfassen einer Parallelschaltungs-Konfiguration; und
b4) Übertragen der logischen Nachricht zu einer parallel geschalteten Endgeräte-Prozeßeinheit.

7. Verfahren nach Patentanspruch 6,
**gekennzeichnet durch** die weiteren Schritte
b5) Bewerten der logischen Nachricht als lokales oder externes Telekommunikations-Leistungsmerkmal;
b6) Übertragen der logischen Nachricht zu einer internen oder externen Leistungsmerkmal-Ausführeinheit, in Abhängigkeit vom Ergebnis der Bewertung in Schritt b5), und
b7) Ausführen des Telekommunikations-Leistungsmerkmals in Abhängigkeit von der übertragenen logischen Nachricht.

8. Verfahren nach einem der Patentansprüche 6 bis 7,
**dadurch gekennzeichnet, daß** die Realisierung der physikalischen und logischen Verbindung der parallel zu schaltenden Teilnehmerendgeräte hierarchisch geordnet ist.

## Claims

1. Switching device for switching calls in parallel to subscriber devices (TEA, TEB, TEC, TEM) with:
a plug-in module (4) for producing a plurality of subscriber interfaces (A, B, C, M) to the subscriber devices (TEA, TEB, TEC, TEM);
a control unit (3) with
a central control unit (5) for controlling central switching procedures in the switching device (1), and
a peripheral control unit (6) for controlling the interworking of the plurality of subscriber interfaces (A, B, C, M); and
**characterised in that**
the peripheral control unit (6) has an interface driver (9) for controlling at least two subscriber interfaces (A, B, C, M) and the interface driver (9) has
- a master peripheral control (12C, 11C, 15) for controlling a master peripheral device (TEC) together with
- at least one auxiliary peripheral control (12M, 11M, 16) for controlling at least one auxiliary peripheral device (MT) and
- a central driver control (10) for central control of handling procedures in the interface driver (9), such that
- a first connection device (14; 14C, 14M, 13) physically connects the master peripheral control to at least one auxiliary peripheral control, and
- a second connection device (17) connects the master peripheral control logically to at least one auxiliary peripheral control.

2. Device according to Claim 1, **characterised in that**
the master and auxiliary peripheral controls each have a line processing unit (12C and 12M) for interworking on the central control unit (5);
a connection processing unit (14C and 14M) to control a connection establishment procedure for an associated subscriber device;
a device processing unit (11C and 11M) to generate logical messages for controlling an associated subscriber device; and
a push button converter processing unit (15 and 16) to convert the logical messages into functional messages for directly controlling an associated subscriber device.

3. Device according to Claim 2, **characterised in that**
the first connection device has an internal connection processing unit (13) which physically interconnects the connection processing units (14C, 14M) of the master and auxiliary peripheral controls.

4. Device according to Claim 2 or 3, **characterised in that**
the second connection device has a message interface (17) which logically interconnects the device processing units (11C, 11M) of the master and auxiliary peripheral controls.

5. Switching device according to one of the Claims 1 to 4, **characterised in that**
the parallel connected subscriber devices have at least one digital fixed line subscriber device (TEC) and one cordless subscriber device (TEM), and the switching device (1) represents a private branch exchange.

6. Method for switching calls in parallel to subscriber devices, with the following steps:
a) establishing a physical connection to subscriber devices to which calls have to be switched in parallel, and
b) establishing a logical connection to subscriber devices connected in parallel, with the following steps:
b1) capturing a functional message about a telecommunications performance feature that has to be processed externally by a switching device;
b2) converting the captured functional message into a logical message;
b3) detecting a configuration in the form of a parallel connection;
and
b4) transmitting the logical message to a parallel connected device processing unit.

7. Method according to Claim 6, **characterised by** the following further steps:
b5) evaluating the logical message as a local or external telecommunications performance feature;
b6) transmitting the logical message to an internal or external performance feature execution unit, depending on the result of the evaluation in step b5), and
b7) executing the telecommunications performance feature as a function of the transmitted logical message.

8. Method according to one of the Claims 6 to 7,
**characterised in that**
the establishment of the physical and logical connection to the parallel connected subscriber devices is subject to a hierarchic level.

## Revendications

1. Dispositif de commutation pour connecter en parallèle des terminaux d'abonné (TEA, TEB, TEC, TEM), comprenant :
une unité d'enfichage (4) pour réaliser une pluralité d'interfaces d'abonné (A, B, C, M) vers les terminaux d'abonné (TEA, TEB, TEC, TEM) ;
une unité de commande (3) avec
une unité de commande centrale (5) pour commander des opérations de commutation centrales dans le dispositif de commutation (1) ainsi que
une unité de commande périphérique (6) pour commander le rattachement de la pluralité d'interfaces d'abonné (A, B, C, M) ;
et
**caractérisé en ce que**
l'unité de commande périphérique (6) comprend un pilote d'interface (9) pour commander au moins deux interfaces d'abonné (A, B, C, M) et **en ce que** le pilote d'interface (9) possède
- une commande d'abonné principal (12C, 11C, 15) pour commander un terminal d'abonné principal (TEC) ainsi que
- au moins une commande d'abonné secondaire (12M, 11M, 16) pour commander au moins un terminal d'abonné secondaire (MT) et
- une commande de pilote centrale (10) pour la commande centrale d'opérations de gestion dans le pilote d'interface (9),
- un premier dispositif de connexion (14 ; 14C, 14M, 13) connectant physiquement ladite commande d'abonné principal à ladite au moins une commande d'abonné secondaire et
- un second dispositif de connexion (17) connectant logiquement ladite commande d'abonné principal à ladite au moins une commande d'abonné secondaire en vue de la synchronisation de données permettant la commande de services complémentaires.

2. Dispositif selon la revendication 1,
**caractérisé en ce que** les commandes d'abonné principal et secondaire comprennent chacune
une unité de processus ligne (12C et 12M) permettant le rattachement à l'unité de commande centrale (5) ;
une unité de processus connexion (14C et 14M) permettant de commander l'établissement d'une connexion pour un terminal d'abonné associé ;
une unité de processus terminaux (11C et 11M) permettant de générer des messages logiques pour commander un terminal d'abonné associé ; et
une unité de processus conversion de touches (15 et 16) permettant de convertir les messages logiques en messages fonctionnels pour la commande directe d'un terminal d'abonné associé.

3. Dispositif selon la revendication 2,
**caractérisé en ce que** le premier dispositif de connexion comporte une unité de processus appels internes (13), qui interconnecte physiquement les unités de processus connexion (14C, 14M) des commandes d'abonné principal et secondaire.

4. Dispositif selon la revendication 2 ou 3,
**caractérisé en ce que** le second dispositif de connexion comporte une interface de message (17), qui interconnecte logiquement les unités de processus terminaux (11C, 11M) des commandes d'abonné principal et secondaire.

5. Dispositif de commutation selon l'une des revendications 1 à 4,
**caractérisé en ce que** les terminaux d'abonné connectés en parallèle comprennent au moins un terminal d'abonné numérique filaire (TEC) et un terminal d'abonné sans fil (TEM) et **en ce que** le dispositif de commutation (1) représente une installation téléphonique privée.

6. Procédé pour connecter en parallèle des terminaux d'abonné, comprenant les étapes :
a) réalisation d'une connexion physique des terminaux d'abonné à connecter en parallèle, et
b) réalisation d'une connexion logique des terminaux d'abonné à connecter en parallèle, comprenant les étapes suivantes :
b1) détecter un service complémentaire de télécommunication, à traiter en externe par un dispositif de commutation, comme message fonctionnel ;
b2) convertir le message fonctionnel détecté en message logique ;
b3) détecter une configuration de connexion en parallèle ;
b4) transmettre le message logique à une unité de processus terminaux connectée en parallèle.

7. Procédé selon la revendication 6,
**caractérisé par** les étapes supplémentaires
b5) évaluer le message logique comme service complémentaire de télécommunication local ou externe ;
b6) transmettre le message logique à une unité d'exécution de service complémentaire local ou externe en fonction du résultat de l'évaluation à l'étape 5, et
b7) exécuter le service complémentaire de télécommunication en fonction du message logique transmis.

8. Procédé selon l'une des revendications 6 à 7,
**caractérisé en ce que** la réalisation des connexions physique et logique des terminaux d'abonné à connecter en parallèle est ordonnée hiérarchiquement.
